# EUROPÄISCHE PATENTANMELDUNG

(11) **EP 1 510 554 A1**
(43) Veröffentlichungstag der Anmeldung: **02.03.2005**
(21) Anmeldenummer: 04016870.0
(22) Anmeldetag: 16.07.2004
(51) Int. Cl.: C08L 83/08, C09D 183/08, C14C 9/00, D06M 15/643

(54) **Verfahren zur Herstellung von Polysiloxan-haltigen Zusammensetzungen und ihre Verwendung zur Hydrophobierung oder Rückfettung von Materialien mit faseriger Struktur**

(30) Priorität: 20.08.2003 DE 10338920
(71) Anmelder: BASF AKTIENGESELLSCHAFT, 67056 Ludwigshafen (DE)
(72) Erfinder: Erhardt, Rainer, Dr., 68199 Mannheim (DE); Scherr, Günter, Dr., 67065 Ludwigshafen (DE); Pabst, Gunther, Dr., 92318 Neumarkt i.d.OPf. (DE); Lunkwitz, Ralph, Dr., 67434 Neustadt (DE)

(57) **Zusammenfassung**

Die vorliegende Erfindung betrifft ein Verfahren zur Herstellung von Zusammensetzungen, enthaltend die folgenden Komponenten:
(A) mindestens ein Carboxylgruppen-haltiges Polysiloxan, welches pro Molekül mindestens ein Strukturelement der allgemeinen Formel I a, I b oder I c 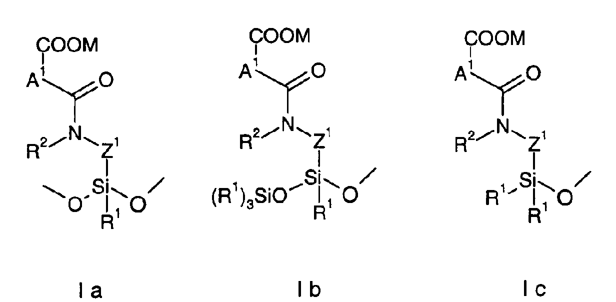 aufweist,
(B1) mindestens eine aprotische, bei Zimmertemperatur flüssige Substanz oder
(B2) mindestens ein organisches Lösemittel,
(C) bis zu 2 Gew.-% Wasser, bezogen auf das Gewicht der Zusammensetzung,
wobei die Variablen wie folgt definiert sind:
- R¹: Wasserstoff, Hydroxyl, C₁-C₆-Alkyl, C₆-C₁₄-Aryl, C₁-C₄-Alkoxy,
- R²: Wasserstoff oder C₁-C₆-Alkyl,
- Z¹: C₂-C₂₅-Alkylen, C₃-C₁₀-Cycloalkylen, C₆-C₁₄-Arylen, -[(CH₂)ₙ-NR²-(CH₂)ₘ]ₚ, 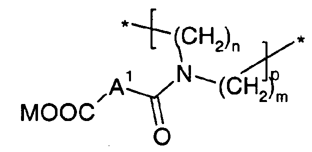
- n, m: ganze Zahlen, gleich oder verschieden, im Bereich von 1 bis 10,
- p: eine ganze Zahl im Bereich von 1 bis 5,
- A¹: C₂-C₂₀-Alkylen, substituiert oder unsubstituiert mit R³ und/oder R⁴, -CH=CR³-, 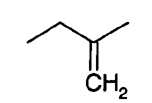
- R³, R⁴: gleich oder verschieden und gewählt aus Wasserstoff, C₁-C₂₀-Alkyl, C₂-C₂₀-Alkenyl, C₆-C₁₄-Aryl, C₁-C₄-Alkoxy;
wobei R³ und R⁴ miteinander unter Bildung eines mono- oder bicyclischen Systems miteinander verbunden sein können,
- M: gleich oder verschieden und gewählt aus Wasserstoff, Alkalimetall und Ammonium, welches substituiert oder cyclisch sein kann,
dadurch gekennzeichnet, dass man mindestens ein Aminogruppen-haltiges Polysiloxan, das pro Molekül mindestens ein Strukturelement der Formel II a, II b oder II c 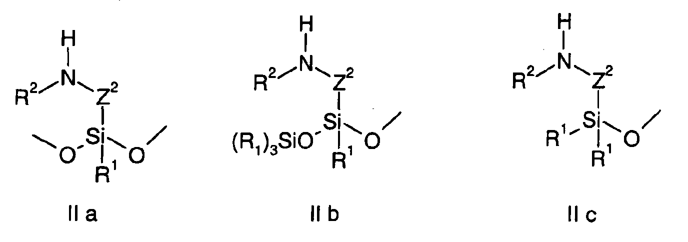 aufweist,
in Gegenwart oder in Abwesenheit von Komponente (B1)
mit mindestens einem Dicarbonsäureanhydrid der Formel III a oder mindestens einem Dicarbonsäurederivat der Formel III b 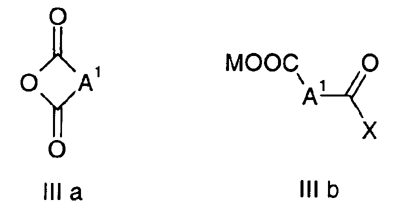 umsetzt, wobei X für eine Abgangsgruppe steht und
- Z²: C₂C₂₅-Alkylen, C₃-C₁₀-Cycloalkylen, C₆-C₁₄-Arylen oder -[(CH₂)ₙ-NR²-(CH₂)ₘ]ₚ bedeutet,
und anschließend gegebenenfalls mit Komponente (B1) oder (B2) versetzt.

## Beschreibung

Die vorliegende Erfindung betrifft ein Verfahren zur Herstellung von Zusammensetzungen, enthaltend die folgenden Komponenten:
(A) mindestens ein Carboxylgruppen-haltiges Polysiloxan, welches pro Molekül mindestens ein Strukturelement der allgemeinen Formel I a, I b oder I c 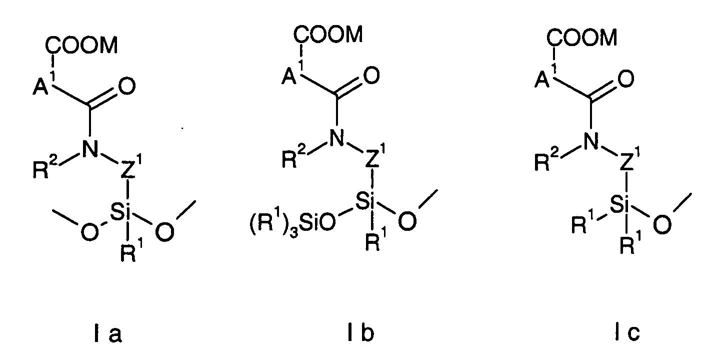 aufweist,
(B1) mindestens eine aprotische, bei Zimmertemperatur flüssige Substanz oder
(B2) mindestens ein organisches Lösemittel,
(C) bis zu 2 Gew.-% Wasser, bezogen auf das Gewicht der Zusammensetzung,
wobei die Variablen wie folgt definiert sind:
- R¹: Wasserstoff, Hydroxyl, C₁-C₆-Alkyl, C₆-C₁₄-Aryl, C₁-C₄-Alkoxy,
- R²: Wasserstoff oder C₁-C₆-Alkyl,
- Z¹: C₂-C₂₅-Alkylen, C₃-C₁₀-Cycloalkylen, C₆-C₁₄-Arylen, -[(CH₂)ₙ-NR²-(CH₂)ₘ]ₚ, 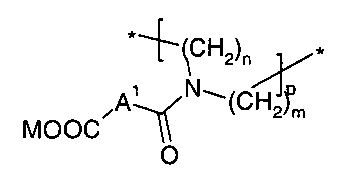
- n, m: ganze Zahlen, gleich oder verschieden, im Bereich von 1 bis 10,
- p: eine ganze Zahl im Bereich von 1 bis 5,
- A¹: C₂-C₂₀-Alkylen, substituiert oder unsubstituiert mit R³ und/oder R⁴, -CH=CR³-, - CR⁴=CR³-, 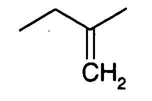
- R³, R⁴: gleich oder verschieden und gewählt aus Wasserstoff, C₁-C₂₀-Alkyl, C₂-C₂₀-Alkenyl, C₆-C₁₄-Aryl, C₁-C₄-Alkoxy;
wobei R³ und R⁴ miteinander unter Bildung eines mono- oder bicyclischen Systems verbunden sein können,
- M: gleich oder verschieden und gewählt aus Wasserstoff, Alkalimetall und Ammonium, welches substituiert oder cyclisch sein kann,
dadurch gekennzeichnet, dass man mindestens ein Aminogruppen-haltiges Polysiloxan, das pro Molekül mindestens ein Strukturelement der Formel II a, II b oder II c 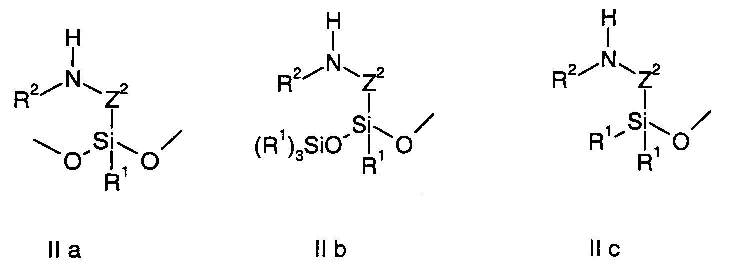 aufweist,
in Gegenwart oder in Abwesenheit von Komponente (B1)
mit mindestens einem Dicarbonsäureanhydrid der Formel III a oder mindestens einem Dicarbonsäurederivat der Formel III b 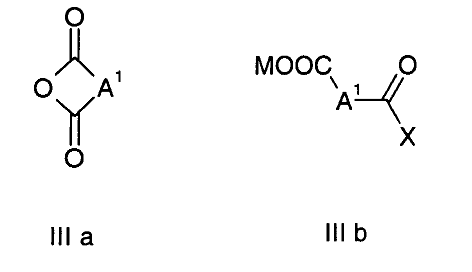 umsetzt, wobei X für eine Abgangsgruppe steht
und
- Z²: C₂-C₂₅-Alkylen, C₃-C₁₀-Cycloalkylen, C₆-C₁₄-Arylen oder -[(CH₂)ₙ-NR²-(CH₂)ₘ]ₚ bedeutet,
und anschließend gegebenenfalls mit Komponente (B1) oder (B2) versetzt.

Weiterhin betrifft die vorliegende Erfindung Zusammensetzungen, erhältlich durch das erfindungsgemäße Verfahren, sowie ihre Verwendung zur Hydrophobierung oder Rückfettung von Materialien mit faseriger Struktur.

Aus EP-A 1 041 189 sind Zusammensetzungen bekannt, enthaltend mindesten ein cyclisches Siloxan und ein Polyethersiloxan. Sie eignen sich zur wasserfreien Reinigung von Geweben und Leder.

Aus GB 2,270,081 sind Mischungen bekannt, enthaltend ein cyclisches Siloxan und ein Polysiloxan, welches vorzugsweise ein Alkylaminogruppe oder eine Dialkylaminogruppe am endständigen Siliziumatom aufweist.

Aus WO 98/21369 sind wässrige Emulsionen von Carboxyamid-Polysiloxanen bekannt und ihre Verwendung während oder nach der Nachgerbung in wässriger Flotte. Die offenbarten Carboxyamid-Polysiloxane werden in Form ihrer wässrigen Emulsionen hergestellt.

In WO 03/23124 werden Mittel zur Reinigung von Lederartikeln genannt, enthaltend 80 - 99,999 % lipophile Flüssigkeit, z.B. cyclisches Siloxan wie beispielsweise Decamethylcyclopentasiloxan,
0 - 5 % Wasser,
0 - 5 % Lederzusatzmittel wie beispielsweise einen Fettlicker, z.B. Carboxyamid-Polysiloxane nach WO 98/21369, ein wasserfest machendes Mittel, einen Farbstofftransferinhibitor, Fixiermittel, Gerbmittel oder ein Parfüm, und
0,001 bis 5% eines wasserunlöslichen Behandlungsmittels, wobei das Behandlungsmittel Siloxangruppen aufweisen kann und vorzugsweise eine Propoxygruppe oder eine größere Alkoxygruppe, Ethoxygruppen und Propoxygruppen in speziellem Verhältnis, eine Silikongruppe, einen HLB-Wert (Hydrophilie-Lipophilie-Wert unter 9, eine OH-Gruppe, keine geladene Gruppe, keine Stickstoff-haltige Gruppe (S. 12, Zeile 17 ff.).

Weiterhin nennt WO 03/23124 Behandlungsmittel für Ledergegenstände, wobei die Behandlungsmittel zusammengesetzt sind aus
ungefähr 1 bis ungefähr 100% eines Behandlungsmittels,
0 bis ungefähr 99 % Wasser,
0 bis 99 % lipophile Flüssigkeit, z.B. cyclisches Siloxan wie beispielsweise Decamethylcyclopentasiloxan,
optional 0 bis ungefähr 99 % Lederzusatzmittel.

WO 03/23124 offenbart jedoch weder ein Verfahren zur Herstellung der genannten Mittel zur Reinigung noch ein Verfahren zur Herstellung der genannten Behandlungsmittel für Ledergegenstände. Insbesondere offenbart WO 03/23124 kein wirtschaftliches Verfahren zur Herstellung von solchen Mitteln zur Reinigung oder Behandlungsmitteln, die nur wenig Wasser enthalten.

Aufgabe der vorliegenden Erfindung war es daher, ein Verfahren zur Herstellung von Zusammensetzungen bereit zu stellen, die zur Hydrophobierung oder Rückfettung von Materialien mit faseriger Struktur besonders gut geeignet sind.

Aufgabe der vorliegenden Erfindung war es weiterhin, Zusammensetzungen zur Hydrophobierung oder Rückfettung von Materialien mit faseriger Struktur bereit zu stellen. Schließlich war es Aufgabe, ein Verfahren zur Hydrophobierung oder Rückfettung von Materialien mit faseriger Struktur bereit zu stellen.

Demgemäß wurden das eingangs definierte Verfahren gefunden.

Das erfindungsgemäße Verfahren ist geeignet zur Herstellung von Zusammensetzungen, enthaltend die Komponenten
(A) mindestens ein Carboxylgruppen-haltiges Polysiloxan, welches pro Molekül mindestens ein Strukturelement der allgemeinen Formel I a, I b oder I c 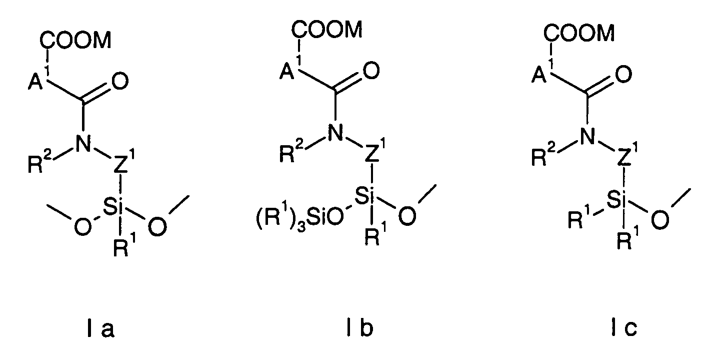 aufweist,
wobei die Variablen wie folgt definiert sind:
- R¹: Wasserstoff,
Hydroxyl,
- C₁-C₆-Alkyl,: wie Methyl, Ethyl, n-Propyl, iso-Propyl, n-Butyl, iso-Butyl, sec.-Butyl, tert.-Butyl, n-Pentyl, iso-Amyl, iso-Pentyl; n-Hexyl, iso-Hexyl, sec.-Hexyl, besonders bevorzugt Methyl,
- C₆-C₁₄-Aryl,: wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- C₁-C₄-Alkoxy,: wie Methoxy, Ethoxy, n-Propoxy, iso-Propoxy, n-Butoxy, iso-Butoxy, sec.-Butoxy, tert.-Butoxy;
- R²: C₁-C₆-Alkyl, wie Methyl, Ethyl, n-Propyl, iso-Propyl, n-Butyl, iso-Butyl, sec.-Butyl, tert.-Butyl, n-Pentyl, iso-Amyl, iso-Pentyl; n-Hexyl, iso-Hexyl, sec.-Hexyl, insbesondere Methyl,
und ganz besonders bevorzugt Wasserstoff,
- Z¹: C₂-C₂₅-Alkylen, bevorzugt C₂-C₁₀-Alkylen wie beispielsweise -(CH₂)₂-, -CH₂-CH(CH₃)-, -(CH₂)₃-, -CH₂-CH(C₂H₅)-, -(CH₂)₄-, -(CH₂)₅-, -(CH₂)₆-, -(CH₂)₇-, - CH₂)₈-, -(CH₂)₉-, -(CH₂)₁₀-; vorzugsweise C₂-C₄-Alkylen; insbesondere -(CH₂)₂-, -CH₂-CH(CH₃)-, -(CH₂)₃-, -(CH₂)₄- und -CH₂-CH(C₂H₅)-; C₃-C₁₀-Cycloalkylen, wie beispielsweise 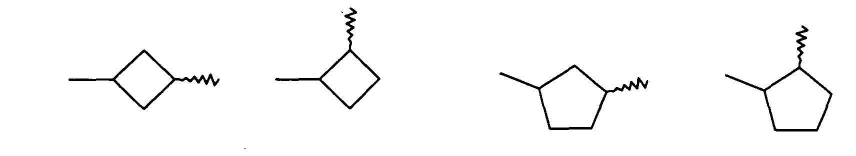 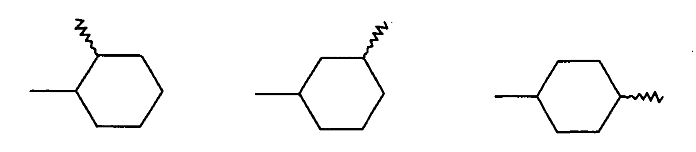 besonders bevorzugt 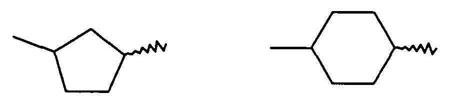
C₆-C₁₄-Arylen, beispielsweise 1,5-Naphthylen, 2,7-Naphthylen und vorzugsweise ortho-Phenylen, meta-Phenylen und besonders bevorzugt para-Phenylen,

-[(CH₂)ₙ-NR²-(CH₂)ₘ]ₚ,

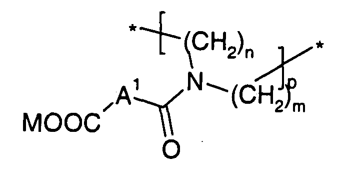

- n, m: ganze Zahlen, gleich oder verschieden, im Bereich von 1 bis 10, bevorzugt 2 bis 5; besonders bevorzugt ist m gleich 3 und n gleich 2,
- A¹: verschieden oder vorzugsweise gleich und gewählt aus
C₂-C₂₀-Alkylen, substituiert oder unsubstituiert mit R³ und/oder R⁴, vorzugsweise -(CH₂)₂-, -CH₂-CHR³-, cis- und trans-CHR³-CHR⁴-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH=CR³-, -CR⁴=CR³-, 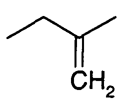
- R³, R⁴: gleich oder verschieden und gewählt aus Wasserstoff,
- C₁-C₂₀-Alkyl,: vorzugsweise C₁-C₁₂-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, n-Undecyl, n-Dodecyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
- C₂-C₂₀-Alkenyl,: bevorzugt ω-C₂-C₂₀-Alkenyl, wie beispielsweise Vinyl, β-Allyl, ω-Butenyl, ω-Pentenyl, ω-Hexenyl, ω-Heptenyl, ω-Octenyl, ω-Nonenyl, ω-Decenyl;
- C₆-C₁₄-Aryl,: wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- C₁-C₄-Alkoxy,: wie Methoxy, Ethoxy, n-Propoxy, iso-Propoxy, n-Butoxy, iso-Butoxy, sec.-Butoxy, tert.-Butoxy;
- R³ und R⁴: können miteinander unter Bildung eines mono- oder bicyclischen Systems verbunden sein, so dass A¹ beispielsweise sein kann: 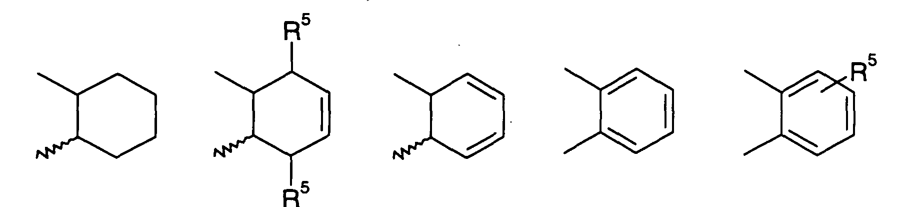 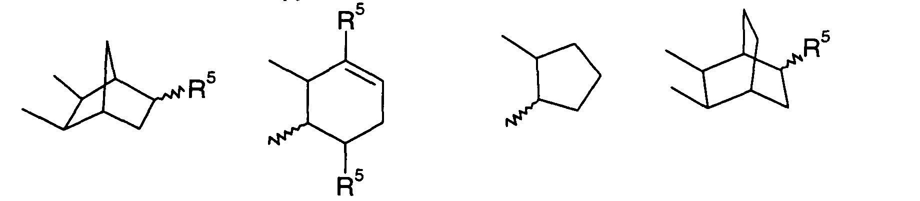
- R⁵: gleich oder verschieden und unabhängig voneinander
- C₁-C₆-Alkyl,: wie Methyl, Ethyl, n-Propyl, iso-Propyl, n-Butyl, iso-Butyl, sec.-Butyl, tert.-Butyl, n-Pentyl, iso-Amyl, iso-Pentyl; n-Hexyl, iso-Hexyl, sec.-Hexyl, insbesondere Methyl,
- C₆-C₁₄-Aryl,: wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- C₁-C₄-Alkoxy,: wie Methoxy, Ethoxy, n-Propoxy, iso-Propoxy, n-Butoxy, iso-Butoxy, sec.-Butoxy, tert.-Butoxy;
COOM oder insbesondere Wasserstoff,
- M: gleich oder verschieden und gewählt aus Wasserstoff oder vorzugsweise
Alkalimetall wie beispielsweise Li⁺, Na⁺, K⁺, Rb⁺, Cs⁺, insbesondere Na⁺ oder K⁺,
und Ammonium, unsubstituiert oder substituiert, beispielsweise Methylammonium, Dimethylammonium, Trimethylammonium, Tetramethylammonium, Ethylammonium, Diethylammonium, Triethylammonium, Tetraethylammonium, Piperidinium,
sauerstoff-haltiges Ammonium wie beispielsweise Ethanolammonium, Diethanolammonium, Triethanolammonium, N-Methyl-Ethanolammonium, N-Methyldiethanolammonium und N-(n-Butyl)-diethanolammonium und

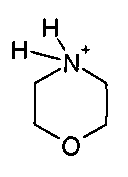

In einer bevorzugten Ausführungsform der vorliegenden Erfindung sind alle R¹ in Carboxylgruppen-haltigem Polysiloxan gleich und jeweils Methyl.

In einer Ausführungsform der vorliegenden Erfindung enthält Carboxylgruppen-haltiges Polysiloxan weiterhin Strukturelemente der Formeln IV und optional der Formeln V a und/oder V b, 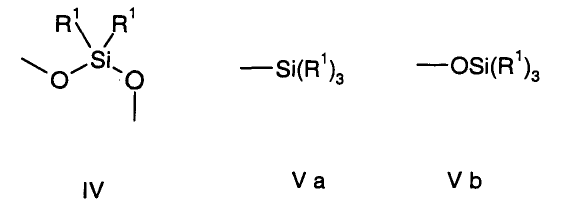 wobei R¹ die oben stehende Bedeutung hat.

Ganz besonders bevorzugte Strukturelemente der allgemeinen Formel IV sind -O-Si(CH₃)₂-O und -O-Si(CH₃)(C₆H₅)-O-.

In einer Ausführungsform sind die Strukturelemente IV in Carboxylgruppen-haltigem Polysiloxanen (A) jeweils verschieden, wobei jeweils ein R¹ pro Si-Atom gleich Methyl und das andere R¹ Phenyl ist.

In einer Ausführungsform der vorliegenden Erfindung sind die Strukturelemente der Formel V a in Carboxylgruppen-haltigem Polysiloxan (A) ausgewählt aus den folgenden Gruppen: -Si(CH₃)₃, -Si(CH₃)₂C₆H₅, -Si(CH₃)₂OH, -Si(CH₃)C₆H₅OH.

In einer Ausführungsform der vorliegenden Erfindung sind die Strukturelemente der Formel V b in Carboxylgruppen-haltigem Polysiloxan (A) ausgewählt aus den folgenden Gruppen: -OSi(CH₃)₃, -OSi(CH₃)₂C₆H₅, -OSi(CH₃)₂OH, -OSi(CH₃)C₆H₅OH.

Es ist möglich, dass Carboxylgruppen-haltige Polysiloxane (A) verschiedene Strukturelemente, gewählt aus I a, I b und I c, aufweisen; so ist es beispielsweise im Rahmen der vorliegenden Erfindung, dass eine erfindungsgemäße Zusammensetzung Carboxylgruppen-haltiges Polysiloxan (A) enthält, welches mindestens ein Strukturelement der Formel I a und mindestens ein Strukturelement der Formel I b aufweist.

Unter dem Begriff "pro Molekül mindestens ein Strukturelement der Formel I a, I b oder 1 c" sind im Rahmen der vorliegenden Erfindung stets Mittelwerte zu verstehen.

Carboxylgruppen-haltige Polysiloxane, welche die Strukturelemente der allgemeinen Formeln I a oder I b oder I c, IV sowie optional V a und/oder V b enthalten, können linear aufgebaut sein oder cyclische oder verzweigte Struktur haben. Verzweigte Polysiloxane, welche die Strukturelemente la oder I b oder I c, IV sowie optional V a und/oder V b enthalten, können zusätzlich Strukturelemente beispielsweise der Formel VI a oder VI b enthalten.

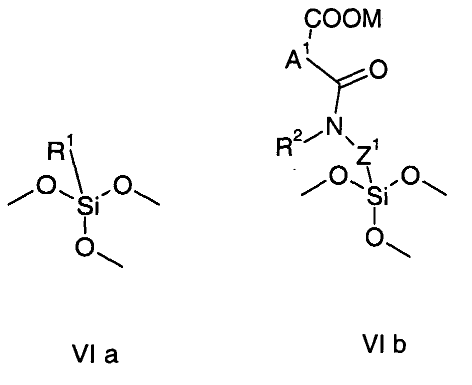

in denen die Variablen wie oben stehend definiert sind. Cyclische unverzweigte Polysiloxane, welche die Strukturelemente der allgemeinen Formel I a oder I b oder I c sowie IV enthalten, enthalten üblicherweise keine Strukturelemente der Formeln V a und V b.

In einer Ausführungsform können durch das erfindungsgemäße Verfahren zugängliche Zusammensetzungen mindestens eine aprotische, bei Zimmertemperatur flüssige Substanz (B1) enthalten. Geeignete aprotische, bei Zimmertemperatur flüssige Substanzen (B1) sind beispielsweise flüssige Paraffine wie beispielsweise n-Hexan, n-Heptan, Cyclohexan, iso-Octan, n-Octan, meta-Xylol, tert.-Butylmethylhexan, und Ester, bevorzugt C₁-C₄-Alkylester, von C₁-C₁₀-Carbonsäuren, insbesondere C₁-C₂-Alkylester, beispielsweise n-Decansäureethylester.

In einer Ausführungsform der vorliegenden Erfindung handelt es sich bei Komponente (B1) um ein lineares, verzweigtes oder vorzugsweise cyclisches Carboxylgruppen-freies Polysiloxan. Lineare, verzweigte und cyclische Carboxylgruppen-freie Polysiloxane sind im Sinne der vorliegenden Erfindung sind aufgebaut aus Strukturelementen der allgemeinen Formel VII, optional VIII a und/oder VIII b und optional IX a; 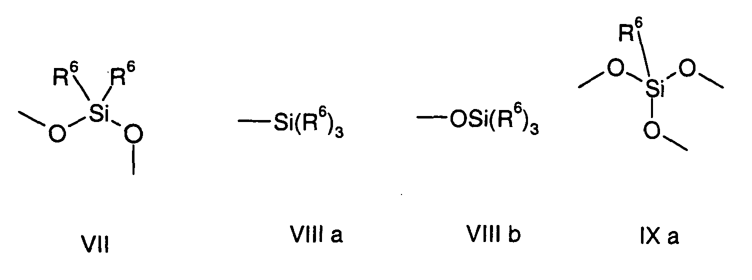 verzweigte Carboxylgruppen-freie Polysiloxane können weiterhin Strukturelemente der allgemeinen Formel IX a enthalten. Dabei bedeutet
- R⁶: Wasserstoff,
- C₁-C₆-Alkyl,: wie Methyl, Ethyl, n-Propyl, iso-Propyl, n-Butyl, iso-Butyl, sec.-Butyl, tert.-Butyl, n-Pentyl, iso-Amyl, iso-Pentyl; n-Hexyl, iso-Hexyl, sec.-Hexyl, besonders bevorzugt Methyl,
- C₆-C₁₄-Aryl,: wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- C₁-C₄-Alkoxy,: wie Methoxy, Ethoxy, n-Propoxy, iso-Propoxy, n-Butoxy, iso-Butoxy, sec.-Butoxy, tert.-Butoxy;
- C₇-C₃₀-Aralkyl,: aufgebaut aus C₁-C₆-Alkylen, welches mit mehreren oder bevorzugt einem C₆-C₁₄-Aryl substituiert ist, der seinerseits mit einem oder mehreren C₁-C₄-Alkyl substituiert sein kann; beispielhaft seien genannt: 1-Phenylethyl, 2-Phenylethyl, 1-Phenyl-n-proypyl, 2-Phenyl-n-propyl, 3-Phenylpropyl, 2-(1-Naphthylethyl), 2-(1-Naphthylmethyl) und insbesondere Benzyl.

Ganz besonders bevorzugte Strukturelemente der allgemeinen Formel VII in Carboxylgruppen-freiem Polysiloxan sind -O-Si(CH₃)₂-O- und -O-Si(CH₃)(C₆H₅)-O-.

In einer Ausführungsform der vorliegenden Erfindung sind die Strukturelemente der Formel VIII a in Carboxylgruppen-freiem Polysiloxan ausgewählt aus den folgenden Gruppen: Si(CH₃)₃, Si(CH₃)₂C₆H₅, Si(C₆H₅)₂CH₃.

Besonders bevorzugt handelt es sich bei Komponente (B1) um Octamethylcyclotetrasiloxan, Decamethylcyclopentasiloxan, Dodecamethylcyclohexasiloxan und Tetradecamethylcyclo-heptasiloxan. Besonders bevorzugt sind Octamethylcyclotetrasiloxan und Decamethyl-cyclopentasiloxan; ganz besonders bevorzugt ist Decamethylcyclopentasiloxan.

Viele cyclische Polysiloxane sind käuflich erhältlich oder können durch dem Fachmann bekannte Verfahren hergestellt werden, z.B. durch Hydrolyse und Kondensation von Dimethyldichlorsilan. Bei der Herstellung von Polysiloxanen mit weniger als drei Siliziumatomen sollte aufgrund der niedrigen Zündtemperaturen dieser Verbindungen in geschlossenen Vorrichtungen oder unter Inertgas gearbeitet werden. Geeignete Arbeitstechniken sind dem Fachmann bekannt.

Andere gut geeignete Substanzen (B1) sind nicht-cyclische Carboxylgruppen-freie Siloxane, aufgebaut aus Strukturelementen der allgemeinen Formel VII, optional VIII a und/oder VIII b und optional IX a; besonders bevorzugt ist lineares Decamethyltetrasiloxan.

Es ist möglich, in den Zusammensetzungen gemäß der vorliegenden Erfindung hochmolekulare lineare oder cyclische Carboxylgruppen-freie Polysiloxane als Komponente (B1) einzusetzen. Dabei ist es bevorzugt, dass die Viskosität der linearen oder cyclischen Carboxylgruppen-freien Polysiloxane als Komponente (B1) so niedrig ist, dass die erfindungsgemäßen Zusammensetzungen gut rührbar sind. Die maximale dynamische Viskosität cyclischer Polysiloxane beträgt vorzugsweise 700 mPas, bevorzugt 500 mPa·s. Besonders bevorzugt werden cyclische Polysiloxane mit einer Viskosität von 100 mPa·s bis 300 mPa·s eingesetzt. Die Messung der Viskosität erfolgt durch dynamische Viskositätsmessung mit einem Platte-Kegel-Viskosimeter (Modell Haake PK 100/ Rotovisco RV 20, Messkopf: 256-0505) nach DIN 12879.

In einer anderen Ausführungsform der vorliegenden Erfindung enthalten Zusammensetzungen gemäß der vorliegenden Erfindung mindestens ein organisches Lösungsmittel (B2), das protisch sein darf, beispielsweise Ethanol oder Isopropanol.

Weiterhin enthalten erfindungsgemäße Zusammensetzungen bis zu 2 Gew.-% Wasser, in einer Ausführungsform 10 ppm bis zu 2 Gew.-% Wasser (C), bevorzugt 100 ppm bis zu 1,5 Gew.-% und besonders bevorzugt 150 ppm bis zu 0,25 Gew.-%, bezogen jeweils auf das Gewicht der Zusammensetzung. Der Wassergehalt lässt sich nach dem Fachmann an sich bekannten Methoden bestimmen, beispielsweise der Karl-Fischer-Titration nach DIN 51777.

Zur Ausübung des erfindungsgemäßen Verfahrens geht man aus von mindestens einem Polysiloxan, welches pro Molekül mindestens ein Strukturelement der allgemeinen Formel II a, II b oder II c 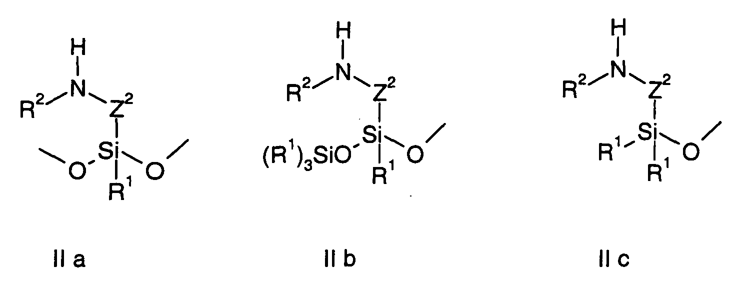 aufweist, im Folgenden auch Aminogruppen-haltiges Polysiloxan genannt, und weiterhin Strukturelemente der allgemeinen Formel IV sowie optional V a und V b,
und setzt mit mindestens einem Dicarbonsäureanhydrid der Formel III a oder mit III b 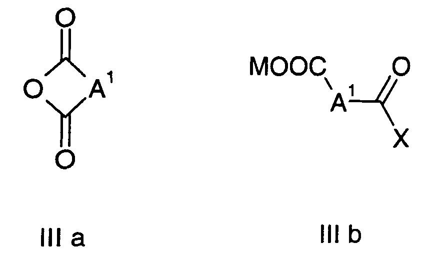 um.

Dabei sind die Variablen wie folgt definiert:
- Z²: wird gewählt aus
C₂-C₂₅-Alkylen, C₃-C₁₀-Cycloalkylen, C₆-C₁₄-Arylen und -[(CH₂)ₙ-NR²-(CH₂)ₘ]ₚ, jeweils wie vorstehend definiert, und X ist eine Abgangsgruppe.

Die übrigen Variablen sind wie vorstehend definiert.

Die als Ausgangsmaterial verwendeten Aminogruppen-haltige Polysiloxane sind durch dem Fachmann an sich bekannte Methoden, beispielsweise durch Hydrolyse von Gemischen von Silylverbindungen zugänglich, wie in WO 98/21369, S. 11 ff. beschrieben, oder nach analogen Methoden.

Als Ausgangsmaterial eingesetzte Aminogruppen-haltige Polysiloxane haben vorteilhaft eine dynamische Viskosität im Bereich von 10 bis 700 mPa·s, was einem mittleren Molekulargewicht Mₙ von etwa 500 bis etwa 60.000 g/mol entspricht. Bevorzugt liegt die dynamische Viskosität im Bereich von 80 bis 100 mPa·s.

Es ist bevorzugt, Aminogruppen-haltiges Polysiloxan mit Dicarbonsäureanhydrid der allgemeinen Formel III a umzusetzen.

Dabei sind die übrigen Variablen wie oben stehend definiert, und unter dem Begriff "pro Molekül mindestens ein Strukturelement der Formel II a, II b oder II c" sind im Rahmen der vorliegenden Erfindung stets Mittelwerte zu verstehen.

Wünscht man verzweigte Carboxylgruppen-haltige Polysiloxane als Komponente (A) herzustellen, so kann man solches Aminogruppen-haltiges Polysiloxan einsetzen, welches Strukturelemente der Formel II d 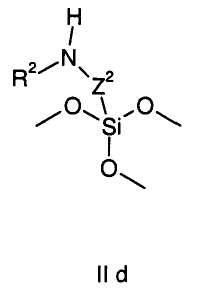 aufweist, und analog mit Dicarbonsäureanhydrid der Formel III a oder mit Dicarbonsäurederivat der Formel III b umsetzen.

In einer Ausführungsform der vorliegenden Erfindung führt man das erfindungsgemäße Herstellverfahren so durch, dass (B1) als Lösemittel dient.

In einer anderen Ausführungsform der vorliegenden Erfindung führt man die Umsetzung von Aminogruppen-haltigem Polysiloxan mit III a oder III b in Abwesenheit von (B1) durch; dann setzt man nach Beendigung der chemischen Reaktion (B1) oder (B2) zu.

Die Umsetzung von Aminogruppen-haltigem Polysiloxan mit III a oder III b erfolgt in Abwesenheit von (B2).

In einer Ausführungsform kann man (B1) und (B2) zusetzen.

Komponente (B1) bzw. (B2) kann man nach dem Fachmann bekannte Methoden, beispielsweise durch Destillation gegebenenfalls zusammen mit einem Trocknungsmittel, von enthaltenem Wasser befreien. Im Allgemeinen ist es jedoch nicht notwendig, aufwändige Schritte zu unternehmen, um durch die Herstellung von (B1) bzw. (B2) bedingte Mengen an Wasser zu entfernen, wenn die Wassermenge 2 Gew.-%, bezogen auf die erfindungsgemäße Zusammensetzung, nicht übersteigt.

In einer Ausführungsform der vorliegenden Erfindung kann man das erfindungsgemäße Herstellverfahren (B1) nach der Umsetzung partiell entfernen. Bevorzugt ist es jedoch, (B1) nach der Umsetzung nicht zu entfernen.

In einer Ausführungsform der vorliegenden Erfindung führt man das erfindungsgemäße Herstellverfahren bei Temperaturen im Bereich von Zimmertemperatur bis 100°C durch, bevorzugt sind 40 bis 80°C.

In einer Ausführungsform der vorliegenden Erfindung setzt man III a bzw. III b zu Aminogruppe von Aminogruppen-haltigem Polysiloxan im molaren Verhältnis von 0,4 : 1 bis 1 : 1 ein , bevorzugt im molaren Verhältnis 0,5 : 1 bis 0,98 zu 1, d.h. man wählt einen Überschuss an Aminogruppen oder äquimolare Mengen Aminogruppen zu III a bzw. III b.

Wählt man ein molares Verhältnis Aminogruppe von III a bzw. III b zu Aminogruppen-haltigem Polysiloxan im molaren Verhältnis von 0,4 : 1 bis 0,5 : 1, so ist es vorteilhaft, bei der Umsetzung auf die Neutralisation mit Amin zu verzichten.

In einer Ausführungsform der vorliegenden Erfindung können Carboxylgruppen-haltige Polysiloxane zusätzlich Strukturelemente der allgemeinen Formeln II a, II b und/oder II c und gegebenenfalls II d aufweisen 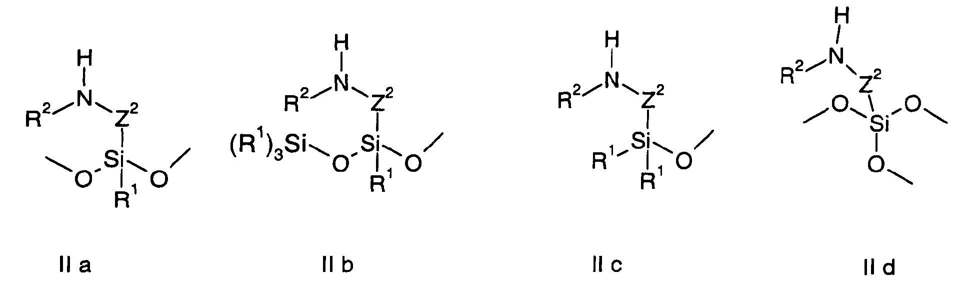 in denen die Variablen wie oben stehend definiert sind. Dies ist insbesondere dann der Fall, wenn man weniger als äquimolare Mengen an III a bzw. III b pro Aminogruppe von Aminogruppen-haltigem Polysiloxan einsetzt.

Die Strukturelemente la, IV und optional II a in den erfindungsgemäß hergestellten Carboxylgruppen-haltigen Polysiloxanen können alternierend, blockweise und bevorzugt statistisch in Carboxylgruppen-haltigen Polysiloxanen verteilt sein.

Wenn R² für Wasserstoff steht, so können Strukturelemente Ia, Ib und Ic der Carboxylgruppen-haltigen Polysiloxane partiell zu Strukturelementen der allgemeinen Formeln VII a, VII b und VII c 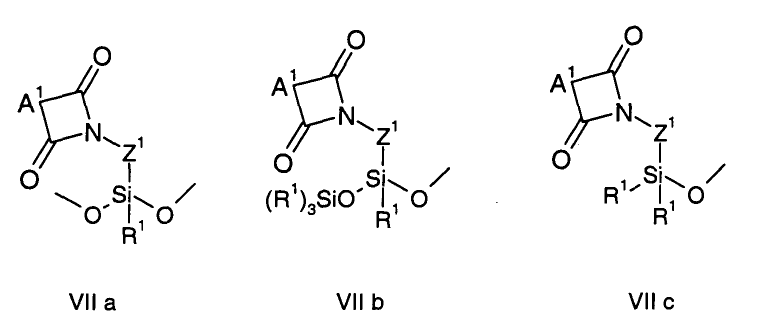 reagieren. Dies ist insbesondere dann der Fall, wenn A¹ = ortho-C₆H₄ gewählt wird.

In einer Ausführungsform der vorliegenden Erfindung liegt das Molekulargewicht Mₙ von Carboxylgruppen-haltigem Polysiloxan (A) im Bereich von 500 bis 60.000 g/mol, bevorzugt 2.500 bis 5.000 g/mol.

Die Molekulargewichtsbestimmung kann durch dem Fachmann an sich bekannte Methoden durchgeführt werden, beispielsweise durch Lichtstreuungsmethoden oder Viskositätsbestimmungen.

In einer Ausführungsform der vorliegenden Erfindung weist mindestens ein Carboxylgruppen-haltiges Polysiloxan (A) einen Gehalt an Carboxylgruppen von 0,02 bis 1,0 meq/g, bevorzugt 0,1 bis 0,3 meq/g auf. Der Gehalt an Carboxylgruppen lässt sich beispielsweise titrimetrisch durch Bestimmung der Säurezahl bestimmen.

In einer Ausführungsform der vorliegenden Erfindung können erfindungsgemäße Zusammensetzungen mindestens eine Substanz, die bei Zimmertemperatur fest ist, als Komponente (D) enthalten.

Als Beispiele für geeignete Substanzen, die bei Zimmertemperatur fest sind, seien genannt: natürliche und synthetische Wachse, native und synthetische Fette, Talgfettalkohole und Talgfettamine.

Als Beispiele für natürliche Wachse seien Bienenwachs, Korkwachs, Montanwachse oder Carnaübawachs genannt.

Als Beispiele für synthetische Wachse seien Polyethylenwachse genannt, wie sie beispielsweise durch radikalische Polymerisation von Ethylen oder durch Ziegler-Natta-Katalyse erhältlich sind. Weiterhin seien Polyisobutylenwachse genannt. Weiterhin seien Paraffingemische genannt; darunter sind Gemische von Kohlenwasserstoffen zu verstehen, die 12 oder mehr Kohlenstoffatome aufweisen und üblicherweise einen Schmelzpunkt im Bereich von 25 bis 45 °C aufweisen. Derartige Paraffingemische können beispielsweise in Raffinerien oder Crackern anfallen und sind dem Fachmann als Paraffingatsch und Sasolwachse bekannt. Ein weiteres Beispiel für synthetische Wachse sind Montanesterwachse.

Als Beispiele für native Fette seien bei Zimmertemperatur feste native Triglyceride genannt wie beispielsweise Lanolin, Schellackwachs sowie deren Gemische, weiterhin Fischtran, Knochenöl. Außerdem seien im Rahmen der vorliegenden Erfindung Fettsäuren genannt sowie feste Paraffine mit einem Schmelzpunkt im Bereich von 21°C bis 100°C.

Als Beispiele für synthetische Fette seien bei Zimmertemperatur feste synthetische Triglyceride genannt.

Wünscht man solche erfindungsgemäßen Zusammensetzungen herzustellen, die mindestens eine Komponente (D) aufweisen, so kann man beispielsweise so vorgehen, dass man zunächst Komponente (A) in Gegenwart von Komponente (B1) nach einem oben beschriebenen Verfahren herstellt und danach mit (D) vermischt.

Man kann auch so vorgehen, dass man Komponente (A) in Abwesenheit von Komponente (B1) nach einem oben beschriebenen Verfahren herstellt und danach mit (B1) oder (B2) und mit (D) vermischt.

In einer Ausführungsform der vorliegenden Erfindung können erfindungsgemäße Zusammensetzungen mindestens einen Emulgator als Komponente (E) enthalten.

Geeignete Emulgatoren sind oberflächenaktive Verbindungen nichtionischen, anionischen, kationischen oder amphoteren Charakters. Insbesondere sind N-(C₉-bis C₂₀-Acyl)aminosäuren mit 2 bis 6 C-Atomen im Aminosäuregrundkörper wie N-Oleoylsarkosin, N-Stearoylsarkosin, N-Lauroylsarkosin oder N-Isononanoylsarkosin geeignet, wobei letztere zumeist in Form ihrer Alkalimetall-, Ammonium-, Trialkanolaminsalze vorliegen. Andere besonders gut geeignete Emulgatoren sind Sulfonylbernsteinsäurehalbester in Form ihrer Natrium-, Kalium oder Ammoniumsalze. Es ist auch möglich, Mischungen verschiedener Emulgatoren einzusetzen.

Wünscht man solche erfindungsgemäßen Zusammensetzungen herzustellen, die mindestens eine Komponente (E) aufweisen, so kann man beispielsweise so vorgehen, dass man zunächst Komponente (A) in Gegenwart von Komponente (B1) nach einem oben beschriebenen Verfahren herstellt und danach mit (E) vermischt.

Man kann auch so vorgehen, dass man Komponente (A) in Abwesenheit von Komponente (B1) nach einem oben beschriebenen Verfahren herstellt und danach mit (B1) oder (B2) und mit Emulgator (E) vermischt.

In einer Ausführungsform der vorliegenden Erfindung enthalten erfindungsgemäße Zusammensetzungen, jeweils bezogen auf das Gesamtgewicht der Zusammensetzung,
5,5 bis 90 Gew.-%, bevorzugt 6 bis 60 Gew.-%, besonders bevorzugt 30 bis 40 Gew.-% Komponente (A),
10 bis 94 Gew.-%, bevorzugt 40 bis 93,5 und besonders bevorzugt 60 bis 68 Gew.-% Komponente (B1) oder
10 bis 94 Gew.-%, bevorzugt 40 bis 93,5 und besonders bevorzugt 60 bis 68 Gew.-% Komponente (B2) oder
10 bis 94 Gew.-%, bevorzugt 40 bis 93,5 und besonders bevorzugt 60 bis 68 Gew.-% eines Gemischs aus Komponente (B1) und (B2), beispielsweise im Gewichtsverhältnis von 1:50 bis 50:1,
0 bis 2 Gew.-%, bevorzugt 100 ppm bis zu 1,5 Gew.-% und besonders bevorzugt 150 ppm bis zu 1 Gew.-% Wasser (C),
0 bis 50 Gew.-%, bevorzugt 10 bis 20 Gew.-% an Komponente (D),
0 bis 10 Gew.-%, bevorzugt 0 bis 4 Gew.-% und besonders bevorzugt 0,1 bis 3 Gew.-% an Emulgator (E).

Ein weiterer Gegenstand der vorliegenden Erfindung ist Verwendung von erfindungsgemäßen Zusammensetzungen zur Hydrophobierung oder Rückfettung von Materialien mit faseriger Struktur.

Unter Materialien mit faseriger Struktur sind vorzugsweise Leder, Pelzfelle und Textilien zu verstehen.

Ein weiterer Gegenstand der vorliegenden Erfindung ist ein Verfahren zur Hydrophobierung oder Rückfettung von Materialien mit faseriger Struktur, umfassend die folgenden Schritte:
a) Aufbringen einer erfindungsgemäßen Zusammensetzung auf Material mit faseriger Struktur,
b) Einwirkenlassen mit oder ohne gleichzeitiger Durchführung mechanischer Behandlungsschritte,
c) optional Waschen und Trocknen.

Erfindungsgemäße Zusammensetzungen können im Allgemeinen in Mengen von 0,01 bis 20 Gew.-%, insbesondere 0,5 bis 15 Gew.-%, bezogen auf das Nassgewicht des faserigen Materials, insbesondere bezogen auf das Falzgewicht von Leder bzw. das Trockengewicht von Textil oder Pelzfellen, aufgebracht werden.

Wird eine erfindungsgemäße Hydrophobierung oder Rückfettung von Leder oder Pelzfellen durchgeführt, erfolgt sie im Allgemeinen nach der Nachgerbung.

In einer Ausführungsform der vorliegenden Erfindung erfolgt die erfindungsgemäße Hydrophobierung oder Rückfettung nach dem Abwelken und Falzen oder der Trocknung des sogenannten wet white bzw. wet blue Leders oder besonders bevorzugt nach der Nachgerbung und anschließenden Trocknung, im Falle von Leder oder Pelzfellen nach der Nachgerbung, in der Regel unter Walken in einer geeigneten Vorrichtung, z.B. in drehbaren Fässern mit Einbauten, bei Flottenlängen von 1 bis 500 %, bevorzugt 50 bis 200 %, bezogen auf das Trocken- bzw. Falzgewicht des Materials mit faseriger Struktur, insbesondere bezogen auf das Falzgewicht des Leders oder Nassgewicht der Pelzfelle, Temperaturen von 5 bis 70°C, bevorzugt 10 bis 60°C, besonders bevorzugt 15 bis 55°C. Im allgemeinen sind die Schritte (a) und (b) nach einer Zeit von insgesamt 5 Minuten bis 10 Stunden, bevorzugt 15 Minuten bis 5 Stunden, besonders bevorzugt 30 Minuten bis 2 Stunden, beendet.

In einer Ausführungsform der vorliegenden Erfindung appliziert man etwa 2 bis 20 Gew.-%, vorzugsweise 5 bis 15 Gew.-%, bezogen auf faseriges Material und insbesondere auf Leder, erfindungsgemäßer Formulierung, durch beispielsweise Auftragen oder Aufsprühen (Schritt (a)). Anschließend lässt man beispielsweise 5 Minuten bis 24 Stunden, vorzugsweise 30 Minuten bis 5 Stunden, einwirken (Schritt (b)) und kann dabei über einen gewissen Zeitraum, beispielsweise 5 Minuten bis 24 Stunden, vorzugsweise 30 Minuten bis 5 Stunden, in einer geeigneten Vorrichtung, z.B. in drehbaren Fässern mit Einbauten, walken. Man kann in der beschriebenen Ausführungsform auf eine Flotte verzichten. Als Temperatur für das Einwirken lassen und gegebenenfalls Walken sind beispielsweise Temperaturen im Bereich von 10°C bis 70°C, bevorzugt Zimmertemperatur bis 50°C, geeignet. Im Anschluss kann man trocknen (Schritt (c)).

Bei dem Einsatz von Polysiloxanen mit weniger als drei Siliziumatomen als Komponente (B1) ist deren niedrige Zündtemperatur zu berücksichtigen. Die Hydrophobierung bzw. Rückfettung mit erfindungsgemäßen Zusammensetzungen, die Siloxane mit niedriger Zündtemperatur enthalten, sollte daher in einem geschlossenen System oder unter Inertgas erfolgen. Geeignete Vorrichtungen sind dem Fachmann bekannt.

Das Waschen im Schritt (c) kann man beispielsweise mit weiterer Komponente (B1) durchführen, besonders vorteilhaft mit Octamethylcyclotretrasiloxan, Decamethylcyclopentasiloxan oder Dodecamethylcyclohexasiloxan oder Gemischen der vorstehend genannten cyclischen Polysiloxane.

Das Trocknen in Schritt (c) kann man beispielsweise bei Temperaturen im Bereich von 40 bis 75°C durchführen. Das Trocknen in Schritt (c) kann man durch Durchleiten eines Luft- oder Inertgasstroms beschleunigen. Man kann das Trocknen in Schritt (c) durch Zentrifugieren beschleunigen. Auch ist es möglich, das Trocknen in Schritt (c) in Form einer Vakuumtrocknung, d.h. unter vermindertem Druck, durchzuführen.

Die Erfindung wird durch Arbeitsbeispiele erläutert.

### 1. Herstellung von erfindungsgemäßen Zusammensetzungen

### Beispiel 1.1

In einem 500-ml-Dreihalskolbenwurden 53,60 g (40 mmol Aminogruppen, bestimmt durch Titration) eines Aminogruppen-haltigen Polysiloxans, enthaltend statistisch verteilte Struktureinheiten II a.1 (R¹ = CH₃, R² = H, Z² = -(CH₂)₃-NH-(CH₂)₂-, IV.1 und V.a.1 (R⁶ = CH₃) 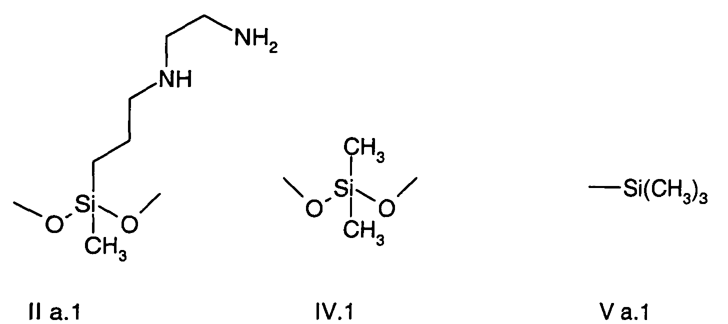 (Amin-Titer: 0,746 mmol/g nach ISO 6618) mit einer dynamischen Viskosität von 134 mPa·s bei 23°C in 198,12 g Decamethylcyclopentasiloxan (B1.1) bei 50 °C vorgelegt. Anschließend wurden 8,96 g (40 mmol) Nonenylbernsteinsäureanhydrid III a.1 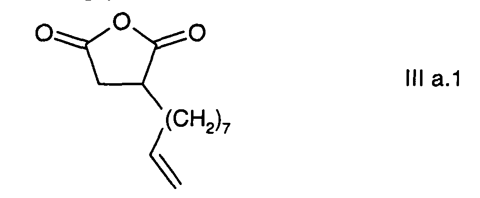 zugetropft. Die einsetzende Reaktion verlief exotherm, was zu einem Temperaturanstieg auf 66°C führte. Danach wurde noch 4 h bei 50 °C nachgerührt (Umsatz nach Anhydridtiter: 96,7 mol-%, bestimmt durch Titration). Dann wurden 3,48 g (40 mmol) Morpholin bei 50 °C eingerührt, 15 min. nachgerührt und anschließend die so erhältliche Zusammensetzung 1 mit externer Eiskühlung auf 20-25 °C abgekühlt.

Ausbeute: 264,2 g erfindungsgemäße Zusammensetzung 1, 25 Gew.-% Lösung des Carboxyamid-Polysiloxans A1 in B1.1
Dynamische Viskosität bei 20°C: 95 mPa·s.
Wassergehalt: 0,52 Gew.-%, bestimmt nach DIN 51777.

### Beispiel 1.2

90,9 g (23,6 mmol Aminogruppen) eines Aminogruppen-haltigen Polysiloxans (Amin-Titer: 0,260 mmol/g, dynamische Viskosität: 249 mPa·s bei 23°C, im Mittel etwa 150 Si-Atome pro Molekül, im Mittel 3 N-Atome im Molekül), enthaltend statistisch verteilte Struktureinheiten II a.1 (R¹ = CH₃, R² = H, Z² = -(CH₂)₃-NH-(CH₂)₂-, IV.1 und V.a.1 (R⁶ = CH₃) wurden bei 50 °C in 147,0 g n-Decamethyltetrasiloxan (B1.2) vorgelegt, 5,05 g (23,6 mmol) Octenylbernsteinsäureanhydrid III a.2 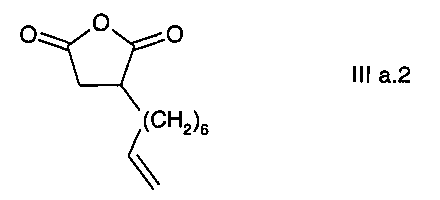 zugetropft und 4 h bei 50°C nachgerührt. (Umsatz: 95 mol-%, bestimmt durch Titration). Anschließend wurde 2,05 g (23,6 mmol) Morpholin bei 50 °C eingerührt, 15 min. nachgerührt und das Produkt mit externer Eiskühlung auf 20-25 °C abgekühlt.

Ausbeute: 245,0 g Zusammensetzung 2, 40 Gew.-% Lösung des Carboxyamid-Polysiloxans A2 in B1.2.
Dynamische Viskosität bei 20 °C: 40 mPa·s.
Wassergehalt: 0,74 Gew.-%, bestimmt nach DIN 51777.

### 2. Anwendung erfindungsgemäßer Zusammensetzungen zur wasserfreien Hydrophobierung oder Rückfettung von Leder

Die Narbenseite eines Crustleders wurde mit 10 Gew.-%, bezogen auf Crustleder, einer erfindungsgemäßen Zusammensetzung nach Beispiel 1.1 besprüht. Anschließend wurde über den Zeitraum von einer Stunde in einem Dosemat ohne Flotte bei 50°C gewalkt. Anschließend wurde über einen Zeitraum von einer Stunde bei 60° durch Hängetrocknen getrocknet und nach 2 Tagen anwendungstechnisch getestet.

Zum Vergleich wurde eine nicht hydrophobierte bzw. nicht rückgefettete Probe des gleichen Crustleders getestet.

**Tabelle 1**

| Eigenschaften des erfindungsgemäß behandelten Leders und einer unbehandelten Vergleichs-Lederprobe | | |
|---|---|---|
| Leder bzw. Vergleichs-Lederprobe | erfindungsgemäß | Ohne Hydrophobierung |
| Eingesetzte Formulierung gemäß Beispiel | 1.1 | - |
| Bally-Penetrometer Wasserdurchtritt nach [min] | 50 50 | 5 5 |
| Statische Wasseraufnahme nach 6 Stunden [Gew.-%] | 28 31 | 129 14 |

Die Wasseraufnahme und die Wasserdurchtrittsmessung wurde mit einem Bally-Penetrometer durchgeführt. Die Messungen am Bally-Penetrometer wurden gemäß 353338 jeweils als Doppelbestimmungen durchgeführt. Die statische Wasseraufnahme wurde bei 15% Stauchung durchgeführt und in Gew.-% angegeben, bezogen auf Crustleder.

## Patentansprüche

1. Verfahren zur Herstellung von Zusammensetzungen, enthaltend die folgenden Komponenten:
(A) mindestens ein Carboxylgruppen-haltiges Polysiloxan, welches pro Molekül mindestens ein Strukturelement der allgemeinen Formel I a, I b oder I c 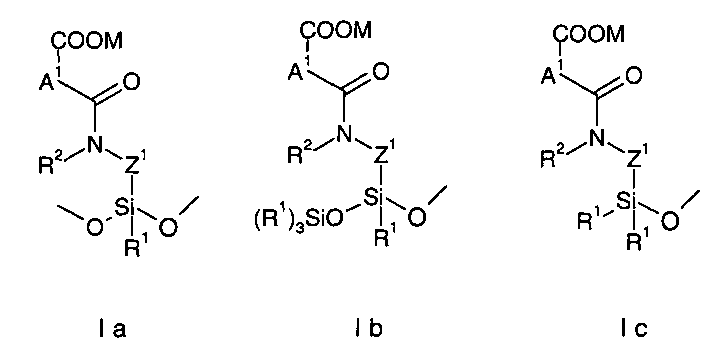 aufweist,
(B1) mindestens eine aprotische, bei Zimmertemperatur flüssige Substanz oder
(B2) mindestens ein organisches Lösemittel,
(C) bis zu 2 Gew.-% Wasser, bezogen auf das Gewicht der Zusammensetzung,wobei die Variablen wie folgt definiert sind:
R¹ Wasserstoff, Hydroxyl, C₁-C₆-Alkyl, C₆-C₁₄-Aryl, C₁-C₄-Alkoxy,
R² Wasserstoff oder C₁-C₆-Alkyl,
Z¹ C₂-C₂₅-Alkylen, C₃-C₁₀-Cycloalkylen, C₆-C₁₄-Arylen,
-[(CH₂)ₙ-NR²-(CH₂)ₘ]ₚ, 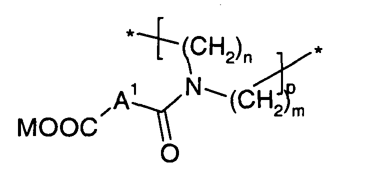
n, m ganze Zahlen, gleich oder verschieden, im Bereich von 1 bis 10,
p eine ganze Zahl im Bereich von 1 bis 5,
A¹ C₂-C₂₀-Alkylen, substituiert oder unsubstituiert mit R³ und/oder R⁴, -CH=CR³-, -CR⁴=CR³-, 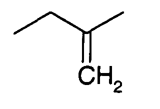
R³, R⁴ gleich oder verschieden und gewählt aus Wasserstoff, C₁-C₂₀-Alkyl, C₂-C₂₀-Alkenyl, C₆-C₁₄-Aryl, C₁-C₄-Alkoxy;
wobei R³ und R⁴ miteinander unter Bildung eines mono- oder bicyclischen Systems verbunden sein können,
M gleich oder verschieden und gewählt aus Wasserstoff, Alkalimetall und Ammonium, welches substituiert oder cyclisch sein kann,
**dadurch gekennzeichnet, dass** man mindestens ein Aminogruppenhaltiges Polysiloxan, das pro Molekül mindestens ein Strukturelement der Formel II a, II b oder II c 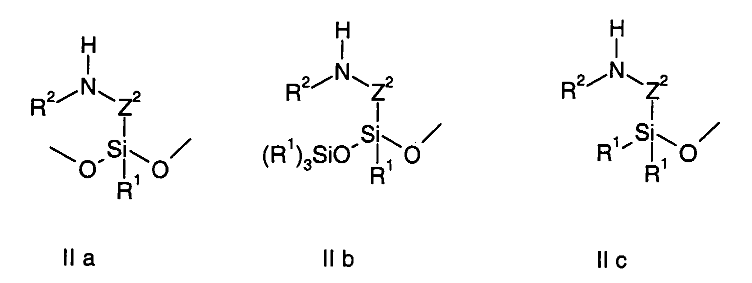 aufweist, in Gegenwart oder in Abwesenheit von Komponente (B1)
mit mindestens einem Dicarbonsäureanhydrid der Formel III a oder mindestens einem Dicarbonsäurederivat der Formel III b 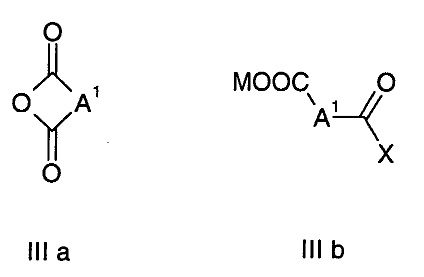 umsetzt,
wobei X für eine Abgangsgruppe steht und
Z² C₂-C₂₅-Alkylen, C₃-C₁₀-Cycloalkylen, C₆-C₁₄-Arylen oder -[(CH₂)ₙ-NR²-(CH₂)ₘ]ₚ bedeutet,
und anschließend gegebenenfalls mit Komponente (B1) oder (B2) versetzt.

2. Verfahren nach Anspruch 1, **dadurch gekennzeichnet, dass** es sich bei Carboxylgruppen-haltigem Polysiloxan (A) um solches Polysiloxan handelt, das Strukturelemente der Formeln IV und optional V a und V b 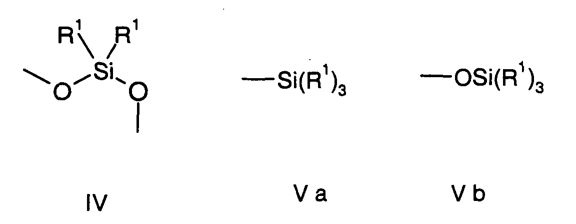 aufweist.

3. Verfahren nach Anspruch 1 oder 2, **dadurch gekennzeichnet, dass** man Carboxylgruppen der Strukturelemente der Formel I a bis I c partiell oder quantitativ mit Amin neutralisiert.

4. Verfahren nach einem der Ansprüche 1 bis 3, **dadurch gekennzeichnet, dass** es sich bei Komponente (B1) um einen Ester einer C₁-C₁₀-Carbonsäure oder ein lineares, verzweigtes oder cyclisches Carboxylgruppen-freies Polysiloxan handelt.

5. Verfahren nach einem der Ansprüche 1 bis 4, **dadurch gekennzeichnet, dass** es sich bei Komponente (B1) um ein cyclisches Carboxylgruppen-freies Polysiloxan handelt.

6. Zusammensetzung, erhältlich durch ein Verfahren nach einem der Ansprüche 1 bis 5.

7. Zusammensetzung nach Anspruch 6, **dadurch gekennzeichnet, dass** sie als weitere Komponente
(D) mindestens eine Substanz enthält, die bei Zimmertemperatur fest ist.

8. Zusammensetzung nach einem der Ansprüche 6 oder 7, **dadurch gekennzeichnet, dass** sie als weitere Komponente
(E) mindestens einen Emulgator enthält.

9. Zusammensetzung nach einem der Ansprüche 6 bis 8, **dadurch gekennzeichnet, dass** mindestens ein Carboxylgruppen-haltiges Polysiloxan (A) einen Gehalt an Carboxylgruppen im Bereich von 0,02 bis 1,0 meq/g aufweist.

10. Zusammensetzung nach einem der Ansprüche 6 bis 9, **dadurch gekennzeichnet, dass** mindestens ein Carboxylgruppen-haltiges Polysiloxan (A) eine mittlere Molmasse Mₙ im Bereich von 2000 bis 60.000 g/mol aufweist.

11. Verwendung von Zusammensetzungen nach einem der Ansprüche 6 bis 10 zur Hydrophobierung oder Rückfettung von Materialien mit faseriger Struktur.

12. Verfahren zur Hydrophobierung oder Rückfettung von Materialien mit faseriger Struktur, umfassend die folgenden Schritte:
a) Aufbringen einer Zusammensetzung nach einem der Ansprüche 6 bis 10 auf Material mit faseriger Struktur,
b) Einwirkenlassen mit oder ohne gleichzeitiger Durchführung mechanischer Behandlungsschritte,
c) optional Waschen und Trocknen.

13. Verfahren zur Hydrophobierung oder Rückfettung von Materialien mit faseriger Struktur nach Anspruch 12, **dadurch gekennzeichnet, dass** man in Schritt (a) eine Zusammensetzung nach einem der Ansprüche 6 bis 10 durch Aufsprühen auf Material mit faseriger Struktur aufbringt.
